# EUROPEAN PATENT SPECIFICATION

(11) **EP 1 005 433 B1**
(45) Date of publication and mention of the grant of the patent: **05.03.2003**
(21) Application number: 98940770.5
(22) Date of filing: 19.08.1998
(51) Int. Cl.: B65G 53/06, B65G 53/32

(54) **BULK CONVEYING SYSTEM AND METHOD OF CONTROLLING A BULK CONVEYING SYSTEM**
FÖRDERSYSTEM FÜR SCHÜTTGUT UND VERFAHREN ZUM REGELN EINES FÖRDERSYSTEMS FÜR SCHÜTTGUT
SYSTEME DE TRANSPORT DE VRAC ET PROCEDE DE REGULATION D'UN TEL SYSTEME

(30) Priority: 20.08.1997 SG 9702684
(43) Date of publication of application: 07.06.2000
(73) Proprietor: Goh, Eng Soon, Singapore 470108 (SG); Goh, Eng Hock, Singapore 709144 (SG); Siah, Tong Ngee, Singapore 469970 (SG); Lo, Yuang Peng, Singapore 487226 (SG)
(72) Inventor: Goh, Eng Soon, Singapore 470108 (SG); Goh, Eng Hock, Singapore 709144 (SG); Siah, Tong Ngee, Singapore 469970 (SG); Lo, Yuang Peng, Singapore 487226 (SG)
(74) Representative: Cross, Rupert Edward Blount
(86) International application number: SG9800063
(87) International publication number: WO99008949

(56) References cited:
- DE-B- 1 017 980
- DE-B- 1 271 628
- US-A- 3 797 890

## Description

The invention relates to a bulk conveying system for conveying a flowable bulk medium of a bulk material, especially construction material, to a location where the bulk material is further processed in a previously not known quantity, for example a work location on a construction site, and to a method of controlling a bulk conveying system.

Wet mortar mixed of cement, sand and water, is widely used as a material for construction works. Providing the wet mortar at the actual work location of the construction site requires a lot of work, if the materials are separately carried to the location and mixed on site.

Therefore, conventional systems are provided which store pre-mixed dry mortar, i.e. a mixture of sand and cement, at a silo and pumping the pre-mixed dry mortar to a mixer unit where water is added to produce wet mortar. The mixer unit can be installed at the actual work location.

However, the conventional systems are inefficient. Usually, on a construction site construction work is carried out simultaneously at a plurality of locations of the construction site. Construction materials such as cement or mortar are required at different locations at the same time. Therefore, it is necessary that either a plurality of conventional systems is used, or- the mixer unit of a single system is moved frequently. Providing a plurality of sytems results in high equipment costs and is often impossible due to a lack of space. Frequently moving a single system results in a great amount of work.

It is an object of the invention to prepare a bulk conveying system which is appropriate to provide material at various remote locations of the same site at the same time, according to the actual needs at the particular remote locations, without causing high costs or a great amount of work, and to create a corresponding method of controlling a bulk conveying system. US3797890 describes a pneumatic materials handling and scaling system comprising a materials supply container, a materials receptor scale container and a pneumatic conveyor tube associated with both containers for conveying material from the supply container to the receptor container at uniform speed and for conveying excess material back to the supply container, characterized by the supply container being provided with adjustable feeder means for introducing the material from the supply container into the pneumatic tube at adjustable rates and the pneumatic tubing being provided with valve means operative between a diverted position in which it diverts substantially the complete flow of material from the pneumatic tube into the receptor container and a through position in which it permits substantially the complete flow of material through the pneumatic tube bypassing the receptor container and preferably a dribble position in which it partially diverts the flow of material from the pneumatic tube into the receptor container while the feeder means is operating at a reduced speed.

DE1017980 describes apparatus for applying a dry material to products. The dry material is distributed around a system using pneumatic conveying. The dry material is stored in a silo with a return route included to return any dry material not used during a delivery process to the silo.

According to the invention, the object of the invention is achieved by a bulk conveying system.

The bulk conveying system according to the invention comprises a main storage container for storing bulk material, the main storage container having a bulk inlet and a bulk outlet. A main conveying pipe connected to the bulk outlet of the main storage container is accompanied by a pump unit for driving the bulk material through the main conveying pipe. A plurality of distribution pipes are provided. Each one of the plurality of distribution pipes is connected to the main conveying pipe and has a distribution valve by means of which the distribution pipe can be opened and closed. Further, a plurality of distribution units is provided. Each one of the plurality of distribution units has a distribution unit container, an inlet connected to the main conveying pipe through a corresponding one of the distribution pipes, a material distribution outlet and a stock level detector.

The stock level detector detects whether or not the actual stock level in the distribution unit container is equal to or falls below a predetermined minimum stock level and detects whether or not the actual stock level in the distribution unit container is equal to or exceeds a predetermined maximum stock level.

Further, the material conveying system comprises a conveyance control system which sequentially receives detected values from the stock level detector of each of the distribution units. The conveyance control system controls the distribution valve of each of the distribution pipes and the pump unit on the basis of the detected values. The control is carried out in such a manner that, if the actual stock level in the distribution unit container of any of the distribution units is equal to or falls below the predetermined minimum stock level, bulk material is demanded to be conveyed from the main storage container to the distribution unit container of one of the distribution units. The bulk material is conveyed to the distribution unit container of said one of the distribution units, until the actual stock level in the distribution unit container of said one of the distribution units is equal to the predetermined maximum stock level.

In this context said one of the distribution units can be that distribution unit which is just detected to have a low actual stock level, or can be another distribution unit to which material is already being conveyed when the latter detection is made.

Conveying bulk material to the distribution unit container of said one of the distribution units, until the actual stock level in the distribution unit container of said one of the distribution units is equal to the predetermined maximum stock level, does not necessarily mean that the distribution unit container is replenished in one single operation. It is also possible that the replenishing of the distribution unit container is interrupted in order to first convey material to another distribution unit container and is then continued.

In this context, conveying until the actual level is equal to the predetermined maximum stock level can also mean conveying until the actual level slightly exceeds the predetermined maximum stock level. Since the actual stock level might be detected at certain time intervals, it is possible that no detection is made when the actual stock level is equal to the predetermined maximum stock level.

By providing the plurality of distribution units it is achieved that bulk material can be conveyed to a plurality of distribution locations, so that e.g. a plurality of work sites on a construction site can be provided with construction material. Therefore, work can be carried out simultaneously at a plurality of locations even if at all the locations material is required at the same time.

By providing one distribution unit container for each of the distribution units it is achieved that a certain quantity of material can be stored at each particular distribution location, so that this certain quantity of material can be used instantaneously without requiring any waiting time resulting from a conveying process. Also, a material buffer may be provided, avoiding a shortage of material in periods when more material is taken out from the distribution unit than is conveyed into it.

By providing one material main storage container and one main conveying pipe for a plurality of distribution units it is achieved that the equipment costs and the space required for the conveying system are kept low. Further, a material mixture such as, e.g., dry mortar can be premixed and stored in the main storage container, so that the mixing process can be centralized and, thereby, the productivity can be increased. Further, at the first step material only must be delivered to one location, namely the main storage container. No consideration is required in advance, regarding the question how much material will be taken out at which work location.

By providing the distribution valves and the pump unit it is achieved that the flowable bulk material can be conveyed independently to each particular one of the distribution units.

By providing a stock level detector in each of the distribution units and the conveyance control system it is achieved that the conveying process is carried out automatically. Further it is achieved that the process is carried out in such a way that the risk of falling short of material in any of the distribution units is minimized. Whenever the actual stock level in the distribution unit container of any of the distribution units is equal to or falls below the predetermined minimum stock level, bulk material is conveyed from the main storage container to the distribution unit container of one of the distribution units. That is, the pump unit is working continuously as long as any actual stock level is lower than targeted, and thereby the pump unit is used as effectively as possible.

It is possible that the conveyance control system receives the detected values from the stock level detector of each of the distribution units continuously or at certain receiving intervals.

According to the invention, it is possible that the predetermined minimum stock level is equal to the predetermined maximum stock level. This has the effect that immediately after material has been taken out of a distribution unit the distribution container of which is completely filled, material is conveyed from the main storage container to the distribution unit. It is preferred, however, that the predetermined minimum stock level is different from the predetermined maximum stock level.

Thereby it is achieved that material is not immediately conveyed from the main storage container to the distribution unit when only a smaller quantity of material has been taken out of the distribution unit container which previously had been completely filled. Thereby it is avoided that the pump unit is started and stopped frequently to convey small quantities of bulk material, which can result in a short lifetime for the pump unit and the whole conveying system.

It is possible that different values for the predetermined minimum stock level are provided for different distribution units and/or different values for the predetermined maximum stock level are provided for different distribution units.

According to the invention, it is possible that the conveyance control system of the bulk conveying system has any appropriate detailed design providing for the replenishment of the distribution units. According to a preferred embodiment of the invention, however, the conveyance control system controls the distribution valve of each of the distribution pipes and the pump unit on the basis of the detected values in such a manner that if the actual stock level in the distribution unit container of more than one of the distribution units is equal to or falls below the predetermined minimum stock level, bulk material is conveyed to the distribution unit container of that one of the distribution units whose actual stock level was equal to or fell below the predetermined minimum stock level first (first-come-first-serve-mode).

By replenishing the distribution unit container of that one of the distribution units first whose actual stock level was equal to or fell below the predetermined minimum stock level first, it is achieved that a distribition unit is replenished which is very likely to be the first to run completely out of material. In the case that this distribution unit has already run out of material, it is very likely that it is this distribution unit which has already passed the longest waiting time without material. Therefore, it is likely that at this distribution unit no other work is left which can be carried out without a further material supply.

According to another preferred embodiment of the bulk conveying system according to the invention, the stock level detector detects the exact actual stock level in the distribution unit container and the conveyance control system controls the distribution valve of each of the distribution pipes and the pump unit on the basis of the detected values in such a manner that if the actual stock level in the distribution unit container of more than one of the distribution units is equal to or falls below the predetermined minimum stock level, bulk material is conveyed to the distribution unit container of that one of the distribution units whose actual stock level is the lowest (lowest-level-first-mode).

By replenishing the distribution unit container of that one of the distribution units first whose actual stock level is the lowest, it is achieved that the distribition unit is replenished which is very likely to run completely out of material.

Thus it is possible that bulk material is conveyed to the distribution unit container of that one of the distribution units whose actual stock level is the lowest for a predetermined time period, regardless of whether or not in the meantime another distribution unit container becomes the one with the lowest stock level. It is further possible to determine the distribution unit to which material is conveyed by considering the material quantity taken out per time from those distribution units having the same level or from those distribution units having an actual stock level lower than the predetermined minimum stock level.

According to the invention it is possible that the bulk conveying system runs wholly automatically and without any need for operation staff to modify the conveying process. It is preferred, however, that the bulk conveying system comprises a manual conveyance control switch by means of which the operation of the conveyance control system can be modified or interrupted. Further preferably a conveyance control programming unit having programming keys is provided. It can be provided, for example, that by means of the manual conveyance control switch or the conveyance control programming unit the minimum and/or the maximum predetermined stock level can be changed, the mode of operation can be switched from the first-come-first-serve-mode to the lowest-level-first-mode, one or more distribution units can be switched off completely, or a termination programm for a distribution unit can be started determining a residual quantity to be conveyed to the distribution unit etc.

By providing an appropriate manual conveyance control switch or the conveyance control programming unit it is achieved that the bulk conveying system can be adapted to the actual needs at the individual construction site.

According to a preferred embodiment of the bulk conveying system according to the invention each distribution unit has an weighing system which measures the accurate amount of material distributed through the material distribution outlet. Preferably, the weighing system is integrated into the distribution unit. Further, preferably the weighing system is designed as to determine the distributed amount of material exactly enough to fulfill the needs of construction work, especially when the distributed material is sand or cement used to mix mortar. By providing a weighing system in each of the distribution units it is achieved that optimum doses of material and optimum mixing ratios can exactly be met. Further, the usage rate of the individual distribution unit can be recorded and monitored.

It is further preferred that each distribution unit has a material demand switch or panel, by means of which a desired amount of material can be preset and the distribution unit can be controlled in such a way that the exact desired amount of material is distributed through the material distribution outlet.

Preferably an information regarding the material demand preset at the particular distribution unit is sent to the conveyance control system. The conveyance control system then carries out a modified control mode conveying the desired amount of material to the respective distribution unit. In the modified control mode the conveyance control system controls the distribution valves and the pump unit in such a way that material is conveyed to the respective distribution unit before or without a detection being made whether the actual stock level falls below the predetermined minimum stock level. According to the invention it is possible that the modified control mode is combined with the regular control mode described above in any appropriate way. By using the modified control mode the reaction time achieved with the bulk material conveying system is decreased. The conveying process can be immediately started when the process of distributing material is started at the distribution unit. Thereby a possible future shortness of material in a particular distribution unit is avoided in advance.

The material demand device can e.g. be a switch, wherein each pressing of the switch corresponds to the demand of a certain amount of material, e.g. 50 kg.

According to the invention it is possible that each of the distribution pipes is formed as one piece and is fixed to the main conveying pipe. It is preferred, however, that each of the distribution pipes comprises a valve portion which forms that end of the distribution pipe joining the main conveying pipe and comprises the distribution valve, and a distribution unit portion which forms that end of the distribution pipe joining the distribution unit, which is disconnectably coupled to the valve portion and which is substantially longer than the valve portion.

By forming each of the distribution pipes as two pieces, a valve portion and a distribution unit portion disconnectably coupled with each other, wherein the distribution unit portion being substantially longer than the valve portion, it is achieved that each distribution unit together with the greatest part of the distribution pipe can be disconnected from the main conveying pipe, e.g. for the purpose of installing it at another location. By providing the distribution valve in the valve portion of the distribution pipe it is achieved that the pipe system which remains when the distribution unit portion is disconnected can be shut down, so that no material flows out. Thereby the flexibility of the system is increased. It is possible to carry out a modification of the pipe system and a displacement of a distribution unit, while maintaining the operation of the remaining pipe system and the remaining distribution units.

According to the invention it is possible that the conveying pipe is formed as a one-piece unit. It is preferred, however, that the main conveying pipe comprises a hydrant portion forming that portion of the main conveying pipe where the distribution pipes are joined, and a conveying portion forming that portion of the conveying pipe which extends between the main storage container and the hydrant portion and being disconnectably coupled to the conveying portion.

Preferably, a conveying pipe valve is provided at the end of the conveying portion close to the hydrant portion, so that the conveying pipe can be closed.

By forming the conveying pipe as a two-piece unit, i.e. of a conveying portion and a hydrant portion disconnectably coupled with each other, it is achieved that the conveying pipe can be extended or modified in another way by inserting an additional pipe piece in order to displace the locations where the distribution units are arranged. For example, an additional vertical pipe piece can be inserted into the main conveying pipe when the distribution units are to be displaced from the levels one to five of a building under construction to the levels six to ten. Thereby the flexibility of the system is increased. It is possible to carry out a displacement of all the distribution units without modifying the greatest part of the conveying pipe. By providing the conveying pipe valve in the conveying portion it is achieved that the pipe system can be shut for the purpose of inserting an additional pipe piece.

According to the invention it is possible that the hydrant portion has any appropriate design. According to a preferred embodiment of the invention, however, the hydrant portion is formed as a one-piece unit comprising a main pipe portion, joining pipe portions laterally protruding from the main pipe portion at different longitudinal positions of the main pipe portion, and a connection joint at each free end of the main pipe portion and the joining pipe portions.

By forming the hydrant portion as a one-piece unit it is achieved that the hydrant portion can be shifted or displaced easily as a whole.

Preferably, the hydrant portion comprises a shackle for fixing a shifting device, e.g. a hook of a crane.

According to another preferred embodiment of the invention, the hydrant portion is designed in modular system and comprises a plurality of hydrant elements, each hydrant element of which has a main pipe portion, a joining pipe portion laterally protruding from the main pipe portion and a connecting joint at each of the free ends of the main pipe portion and the joining pipe portion, with the hydrant elements being joined so as to form a row, wherein pairs of the connecting joints at the free ends of the main pipe portions are disconnectably joined to each other.

By designing the hydrant portion in modular system it is achieved that the hydrant portion can be modified easily in order to adapt the pipe system after the displacement of one or more of the distribution units. It is, for example, possible to shut down one of the hydrant elements at its joining pipe portion and, instead, to add a further hydrant element at the free end of the hydrant portion. Thereby it is e.g. possible to displace the plurality of distribution units from the levels one to five of a building under construction to the levels two to six. This can be achieved by just moving the distribution unit previously located on level one to level six. The operation of the distribution units of levels two to five can be continued during that displacement activity. Hence the hydrant portion designed in modular system serves to increase the flexibility of the conveying system.

According to the invention it is possible that the bulk conveying system has only one conveying unit connected to the main storage container and comprising a conveying pipe, a plurality of distribution pipes and a plurality of distribution units. It is preferred, however, that the bulk conveying system comprises a plurality of conveying units connected to the main storage container, each conveying unit of which comprises a conveying pipe, a plurality of distribution pipes and a plurality of distribution units. Thereby a further increase of the flexibility of the conveying system is achieved .

According to the invention it is possible that the bulk conveying system is used with any flowable dry bulk material in the form of powder, granular and/or granulate materials, , e.g. chemicals, sugar, sand, cement, dry mortar etc.. If reqired or desired, a dry bulk material can be made flowable or more flowable by mixing it with air so as to fluidize the bulk material to obtain a flowable dry bulk medium with the desired flow characteristics. It is also possible to use the system at any location. It is preferred, however, to use the bulk conveying system for conveying a construction material to different locations of the construction site, especially to different levels of a building under construction.

According to the invention it is possible that the bulk conveying system is used for supplying any flowable or fluidized dry construction material, especially dry cement or dry mortar. Preferably, the invention is used for supplying dry mixtures produced by dry mixing of two or more different types of mono bulk materials with any mixing ratio/s because by the invention it is assured that the mixing ratio/s and the quality of the mixture/s are maintained without segregation of the mixtures when they arrive at their final destination/s.

With respect to the method, the object of the invention is achieved by a method for controlling a bulk conveying system.

The method for controlling a bulk conveying system for conveying bulk material from a main storage container to a plurality of distribution units comprises the steps of: detecting in each of the distribution units whether or not the actual stock level of bulk material in the distribution unit is equal to or falls below a predetermined minimum stock level, and whether or not the actual stock level of bulk material in the distribution unit is equal to a predetermined maximum stock level; sequentially receiving detected values from each of the distribution units; if a detected value is received from one of the distribution units, indicating that the actual stock level of bulk material in said one distribution unit is equal to or falls below the predetermined minimum stock level, checking whether or not presently bulk material is being conveyed to any of the distribution units, and, if it is found that presently bulk material is being conveyed to none of the distribution units, controlling the bulk conveying system in such a manner that the conveying of bulk material to said one distribution unit is started; and, if a detected value is received from one of the distribution units indicating that the actual stock level of bulk material in said one distribution unit is equal to the predetermined maximum stock level, checking whether or not presently bulk material is being conveyed to said one distribution unit, and, if it is found that presently bulk material is being conveyed to said one distribution unit, controlling the conveying system in such a manner that the conveying of bulk material to said one distribution unit is stopped, and checking a queue of distribution units to be replenished whether the queue presently comprises another distribution unit, and, if it is found that the queue presently comprises a distribution unit is in the queue, controlling the conveying system in such a manner that the conveying of bulk material to the distribution unit which is the next in the queue is started and deleting the distribution unit from the queue.

According to a preferred embodiment of the method of the invention, after a detected value has been received from one of the distribution units indicating that the actual stock level of bulk material in said one distribution unit is equal to or falls below the predetermined minimum stock level, after it has been checked whether or not presently bulk material is being conveyed to any of the distribution units and after it has been found that presently bulk material is being conveyed to any of the distribution units, it is checked whether or not presently bulk material is being conveyed to said one of the distribution units, and, if it is found that presently bulk material is being conveyed to said one of the distribution units, the conveying system is controlled in such a manner that the conveying of bulk material to said one of the distribution units is continued, and, if it is found that presently bulk material is not being conveyed to said one of the distribution units, said one distribution unit is attached at the end to the queue of distribution units to be replenished, if said one distribution unit is not yet in the queue.

According to a preferred embodiment of the method of the invention, the exact value of the actual stock level of bulk material in each distribution unit is detected, and after a detected value has been received from one of the distribution units indicating that the actual stock level of bulk material in said one distribution unit is equal to or falls below the predetermined minimum stock level and after it has been found that presently bulk material is being conveyed to any of the distribution units, it is checked which of the distribution units has the lowest actual stock level. The conveying system is controlled in such a manner that bulk material is conveyed to that one of the distribution units which has the lowest actual stock level, and any other one of the distribution units which has an actual stock level which is equal to or falls below the predetermined minimum stock level is placed in the queue of distribution units to be replenished, wherein the position number in the queue depends on the actual stock level. The lower the actual stock level, the lower the position in the queue.

An import feature of the system and method designed according to the invention that any type of flowable or fluidized dry bulk material can be conveyed to one outlet or even more than one outlets simultaneously or one by one and one at a time. The system can be controlled automaticly or manually and is also capable to provide manual override modes to suit different replenishing requirement for each outlet. For instance the system may enable to grant more priority on supply to an outlet requiring more urgent replenishing by cutting the queue, or may enable to stop the supply to a first outlet halfway and start the supply to another second outlet that requires immediate supply whereafter supplying of bulk material to the first outlet is completed.

Preferred embodiments of the invention are described with reference to the drawing. In the drawing:
Figure 1 shows a schematic view of an embodiment of the bulk conveying system according to the invention being installed on a building construction site.
Figure 2 is a front view of an embodiment of the hydrant unit of the bulk conveying system according to the invention, wherein the hydrant unit is designed as a one-piece unit.
Figure 3 is a front view of an embodiment of the hydrant unit of the bulk conveying system according to the invention, wherein the hydrant unit is designed in modular system.

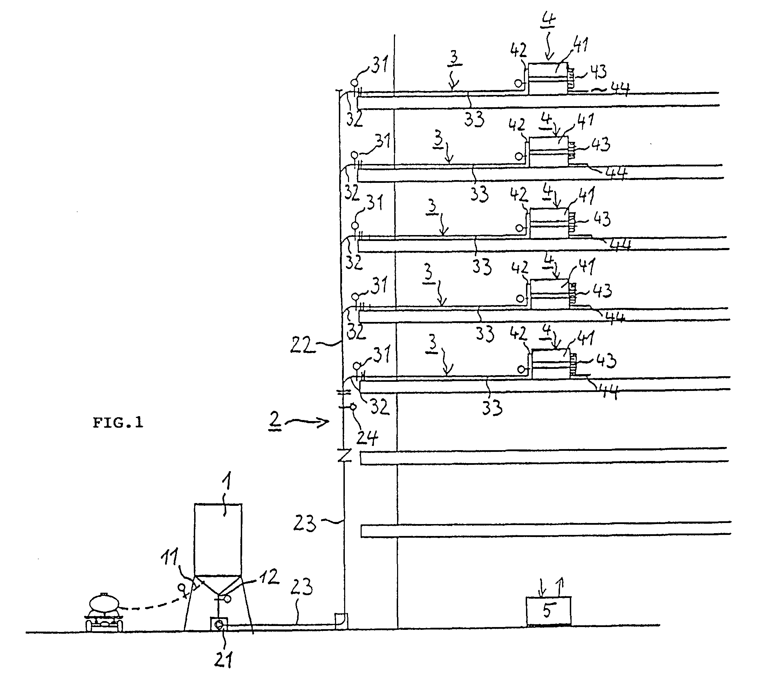

From figure 1 a bulk conveying system is obvious, which is arranged on a building construction site. A building under construction having eight levels is schematically shown. Besides the building a main storage container 1 for storing bulk material formed as a silo is arranged. The main storage container 1 has a bulk inlet 11 and a bulk outlet 12. The bulk inlet 11 is connected, through a rubber hose, to a truck supplying fresh material to the main storage container 1.

A main conveying pipe 2 is connected to the bulk outlet 12 of the main storage container 1 which is at a distance from the ground. The main conveying pipe is formed by a conveying portion 23 and a hydrant portion 22. The conveying portion 23 extends from the bulk outlet 12 to the ground. In the portion where the conveying portion 23 meets the ground, the main conveying pipe 2 has a pump unit 21 which is arranged on the ground and is provided for driving the bulk material through the main conveying pipe 2. The conveying portion 23 further extends along the ground towards the building and is upwardly curved close to the building. At the position of the curve the conveying portion 23 is anchored by means of a pipe stand. Further, the conveying portion extends upwardly along the building and ends between the third and the fourths level of the building, and close to the end the conveying portion comprises a conveying pipe valve 24.

Above the conveying pipe valve 24 the conveying portion 23 is connected to the hydrant portion 22. The hydrant portion 22 is formed as a one-piece unit and has a main pipe portion extending vertically along the building and ending at the eighth level of the building. Joining pipe portions protrude laterally from the main pipe portion towards the building. One joining pipe portion protrudes from the main pipe portion at the height of each of the fourth, fifth, sixth, seventh and eighth level of the building. At each of the joining pipe portions of the hydrant portion 22 a distribution valve 31 is provided.

Each of the joining pipe portions provided with the distribution valve 31 forms a valve portion 32 of a distribution pipe 3. Each of the distribution pipes 3 comprises the valve portion 32 and a distribution unit portion 33. The valve portion 32 and the distribution unit portion 33 are disconnectably coupled close to the distribution valve 31. Each of the distribution unit portions 33 extends parallel to the floor of the respective level into the center of the building.

The distribution unit portion 33 of each distribution pipe 3 is connected to a distribution unit 4 through an inlet 42 leading to a distribution unit container 41. At each inlet 42 of a distribution unit 4 a further valve is provided. Each of the disribution units 4 has a material distribution outlet 44 and a stock level-detector 43 (only shown schematically). Each of the stock level detectors is connected via a data line (not shown) to a conveyance control system 5 (only shown schematically).

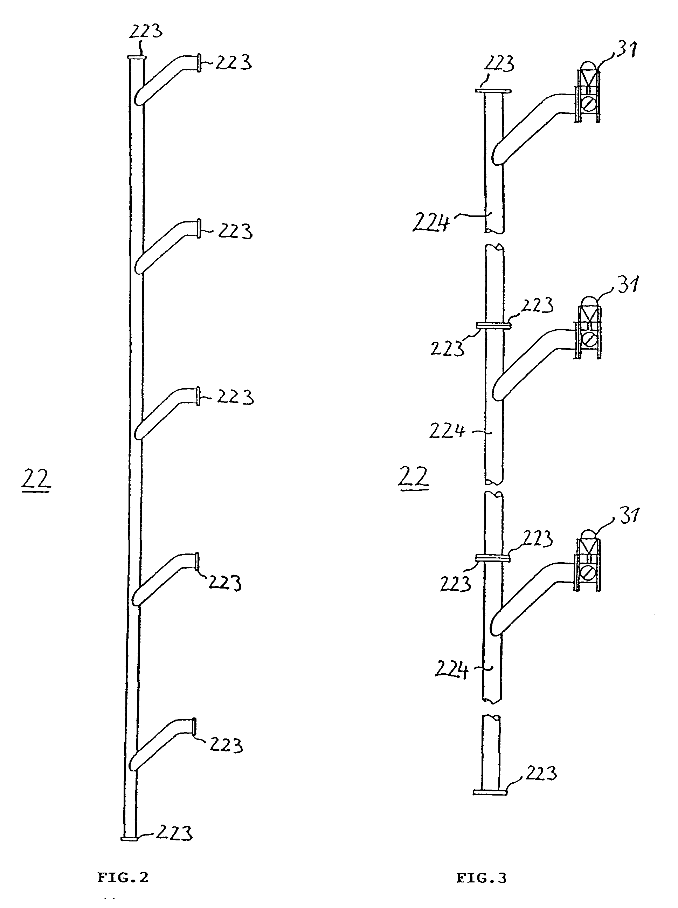

From figure 2 a hydrant portion 22 can be seen more in detail which is designed as one piece. The basic shape of the hydrant portion 22 is the same as that of figure 1, the difference being that no distribution valves 31 are provided for the hydrant portion 22. The hydrant portion 22 has a main pipe portion extending vertically. Joining pipe portions protrude laterally from the main pipe portion. A connection joint 223 is provided at each free end of the main pipe portion and the joining pipe portions.

From figure 3 another embodiment of a hydrant portion 22 can be gathered in greater detail, which is designed as a modular system. The hydrant portion 22 comprises three hydrant elements 224 which all have the same design. Each hydrant element 224 has a main pipe portion. A joining pipe portion laterally protrudes from the main pipe portion. A connecting joint 223 is provided at each of the free ends of the main pipe portion and the joining pipe portion. Each of the joining pipe portions comprises a distribution valve 31. Pairs of the hydrant elements 224 are joined, so that the three hydrant elements form a row. Therefore, pairs of the connecting joints 223 at the free ends of the main pipe portions are disconnectably joined to each other.

It is a preferred embodiment of the invention to use an embodiment of the method according to the invention in combination with an embodiment of the bulk conveying system according to the invention.

Bulk material in the meaning of the invention means any flowable or fluidized dry bulk medium which is flowable to the desired extent or is made floable by adding a fluid medium like a gaseous medium in order to obtain the desired flow characteristics.

Pump unit in the meaning of the invention is any pumping means which is suitable for the transfer of the bulk material from the main storage container into the conveying system and for pumping the flowable bulk material through the pipe conveying system. Thus, as the pump unit according to the invention, a transfer unit may be present as an individual unit in combination with an idividual compressor unit or may be integrated into a compressor unit. The pump unit may be incorporated into the main storage container or may be arranged downstream and/or upstream of the outlet of the main storage container. For instance, the pump unit may comprise a compressor for compressing air or another gaseous medium as a carrier medium for the bulk material. Further, a mixing unit may be incorporated into the pump unit for mixing a carrier fluid with the bulk material to be introduced into and conveyed in the conveying system.

The term pipe means any rigid or flexible pipe or hose which is suitable for the purposes of the invention. The pipe or hose may have any suitable length and may extend in vertical, horizontal or inclined directions. Further, the pipes may be of a continuous design or may constructed by several pipe sections which are permanently or loosenably connected to each other.

The distribution pipes may be permanently or loosenably connected to the main conveying pipe. Preferably, the distribution pipes are connected to the main conveying pipe by connecting joints which may be of any suitable shape like T-joints, Y-joints, elbow joints or the like or even crossover joints to connect e.g. two distribution pipes to the main conveying-pipe at the same branching location. These joints may be of a straight design or may be reducing joints of any material that jointed to pipes or hoses. The joints can be couplings, threaded joints, permanently welded joints or the like or a combination thereof.

Preferably a piece of single valve is installed at the respective outlet portion of the joints. The valves can be any valves designed for linear movement or rotary movement of the movable valve member, swing valves or pinch valves or the like of any suitable design. The valve actuators can be of linear or rotary design, rack and pinion design or the like or of a combination thereof. For pinch valves, the body itself can be the actuator or the actuator can be of any other suitable type. Electrical, pneumatic or hydraulic power or their combination may be used to actuate the actuators for opening and closing the valves.

## Claims

1. Bulk conveying system for conveying a flowable dry bulk material, comprising
― a main storage container (1) for storing the dry bulk material, the main storage container (1) having a bulk inlet (11) and a bulk outlet (12),
― a main conveying pipe (2) connected to the bulk outlet (12) of the main storage container (1) and accompanied by a pump unit (21) for driving the bulk material through the main conveying pipe (2),
― a plurality of distribution pipes (3), each distribution pipe (3) of which being connected to the main conveying pipe (2) and having a distribution valve (31) by means of which the distribution pipe (3) can be opened and closed,
― a plurality of distribution units (4), each distribution unit (4) of which having a distribution unit container (41), an inlet (42) connected to the main conveying pipe (2) through a corresponding one of the distribution, pipes (3), a material distribution outlet (44) and a stock level detector (43) detecting whether or not the actual stock level in the distribution unit container (41) is equal to or falls below a predetermined minimum stock level and whether or not the actual stock level in the distribution unit container (41) is equal to or exceeds a predetermined maximum stock level,
― a conveyance control system (5) which sequentially receives detected values from the stock level detector (43) of each of the distribution units (4) and controls distribution valve (31) of each of the distribution pipes (3) and the pump unit (21) on the basis of the detected values such that, if the actual stock level in the distribution unit container (41) of any of the distribution units (4) is equal to or falls below the predetermined minimum stock level, bulk material is demanded to be conveyed from the main storage container (1) to the distribution unit container (41) of one of the distribution units (4) until the actual stock level in the distribution unit container (41) of said one of the distribution units (4) is equal to the predetermined (maximum stock level,
whereby the bulk conveying system is adapted to convey flowable bulk material under control of the conveyance control system
― from the main storage container (1) through the main conveying pipe (2) and through, each selected one of the distribution pipes (3) into that distribution unit (4) which is connected to said selected one of the distribution pipes (3).

2. Bulk conveying system according to claim 1, wherein the predetermined minimum stock level is different from the predetermined maximum stock level.

3. Bulk conveying system according to claim 1 or 2, wherein the conveyance control system (5) controls the distribution valve (31) of each of the distribution pipes (3) and the pump unit (21), on the basis of the detected values in such a manner that, if the actual stock level in the distribution unit container (41) of more than one of the distribution units (4) is equal to or falls below the predetermined minimum stock level, bulk material is conveyed to the distribution unit container (41) of that one of the distribution units (4), the actual stock level of which was equal to or fell below the predetermined minimum stock level first.

4. Bulk conveying system according to any one of claims 1 to 3, wherein the stock level detector (43) detects the exact actual stock level in the distribution unit container (41) and the conveyance control system (5) controls the distribution valve (31) of each of the distribution pipes (3) and the pump unit (21) on the basis of the detected values in such a manner that, if the actual stock level in the distribution unit container (41) of more than one of the distribution units (4) is equal to or falls below the predetermined minimum stock level, bulk material is conveyed to the distribution unit container (41) of that one of the distribution units (4), the actual stock level of which is the lowest.

5. Bulk conveying system according to any one of claims 1 to 4, comprising a manual conveyance control switch (6) by means of which the operation of the conveyance control system (5) can be modified or interrupted.

6. Bulk conveying system according to any one of claims 1 to 5, wherein each distribution unit (4) has a weighing system which measures the accurate amount of material distributed through the material distribution outlet (44).

7. Bulk conveying system according to any one of claims 1 to 5, wherein each distribution unit (4) has a material demand switch or panel, by means of which a desired amount of material can be preset and the distribution unit (4) can be controlled in such a way that the desired amount of material is distributed through the material distribution outlet (44).

8. Bulk conveying system according to any one of claims 1 to 7, wherein each of the distribution pipes (3) comprises
a) a valve portion (32) forming that end of the distribution pipe (3) which joins the main conveying pipe (2) and comprising the distribution valve (31), and
b) a distribution unit portion (33) forming that end of the distribution pipe (3) which end joins the distribution unit (4), being disconnectably coupled to the valve portion (32) and being substantially longer than the valve portion (32).

9. Bulk conveying system according to any one of claims 1 to 8, wherein the main conveying pipe (2) is formed of
a) a hydrant portion (22) forming that portion of the main conveying pipe (2) where the distribution pipes (3) are joined, and
b) a conveying portion (23) forming that portion of the conveying pipe (2) which extends between the main storage container (1) and the hydrant portion (22), and being disconnectably coupled to the conveying portion (23).

10. Bulk conveying system according to claim 9, wherein the hydrant portion (22) is formed as one piece comprising a main pipe portion, joining pipe portions laterally protruding from the main pipe portion at different longitudinal positions of the main pipe portion, and a connection joint (223) at each free end of the main pipe portion and the joining pipe portions.

11. Bulk conveying system according to claim 9, wherein the hydrant portion (22) is designed in modular system and comprises a plurality of hydrant elements (224), each hydrant element (224) of which having a main pipe portion, a joining pipe portion laterally protruding from the main pipe portion and a connecting joint (223) at each of the free ends of the main pipe portion and the joining pipe portion, the hydrant elements (224) being joined so as to form a row, wherein pairs of the connecting joints (224) at the free ends of the main pipe portions are disconnectably joined to each other.

12. Bulk conveying system according to any one of claims 1 to 11, wherein a plurality of conveying units are connected to the main storage container (1), each conveying unit of which comprising a conveying pipe (2), a plurality of distribution pipes (3) and a plurality of distribution units (4).

13. Use of the bulk conveying system according to any one of claims 1 to 12 for conveying a construction material to different locations of the construction site, especially to different levels of a building under construction.

14. Use of a bulk conveying system according to claim 13 for conveying a dry construction material, especially a mixture of powder and/or granular materials to said different locations of the construction site.

15. Method for controlling a bulk conveying system for conveying bulk material from a main storage container to a plurality of distribution units via a main conveying pipe and via a plurality of distribution pipes, each distribution pipe being connected to the main conveying pipe and having a distribution valve by means of which the distribution pipe can be opened and closed, comprising the steps of
a) detecting in each of the distribution units whether or not the actual stock level of bulk material in the distribution unit is equal to or falls below a predetermined minimum stock level, and whether or not the actual stock level of bulk material in the distribution unit is equal to a predetermined maximum stock level and the further steps of
b) sequentially receiving detected values from each of the distribution units,
c) if a detected value is received from one of the distribution units, indicating that the actual stock level of bulk material in said one distribution unit is equal to or falls below the predetermined minimum stock level,
c1) checking whether or not presently bulk material is being conveyed to any of the distribution units, and,
c2) if it is found that presently bulk material is being conveyed to none of the distribution units, controlling the bulk conveying system in such a manner that the conveying of bulk material to said one distribution unit is started,
d) if a detected value is received from one of the distribution units, indicating that the actual stock level of bulk material in said one distribution unit is equal to the predetermined maximum stock level,
d1) checking whether or not presently bulk material is being conveyed to said one distribution unit, and,
d2) if it is found that presently bulk material is being conveyed to said one distribution unit, controlling the conveying system in such a manner that the conveying of bulk material to said one distribution unit is stopped, and
d3) checking a queue of distribution units to be replenished whether the queue presently comprises another distribution unit to be replenished, and,
d4) if it is found that the queue presently comprises a said another distribution unit, controlling the conveying system in such a manner that the conveying of bulk material to said another distribution unit being the next in the queue is started and deleting the sdaid another distribution unit from the queue.

16. Method for controlling a bulk conveying system according to claim 15, wherein, after receiving a detected value from one of the distribution units indicating that the actual stock level of bulk material in said one distribution unit is equal to or falls below the predetermined minimum stock level, after checking whether or not presently bulk material is being conveyed to any of the distribution units and after finding that presently bulk material is being conveyed to any of the distribution units,
a) it is checked whether or not presently bulk material is being conveyed to the one of the distribution units, and,
b) if it is found that presently bulk material is being conveyed to the one of the distribution units, the conveying system is controlled in such a manner that the conveying of bulk material to that one of the distribution units is continued, and,
c) if it is found that presently bulk material is not conveyed to the one of the distribution units, said one distribution unit is placed at the end of the queue of distribution units to be replenished if said one distribution unit is not yet in the queue.

17. Method for controlling a bulk conveying system according to claim 15, wherein
a) for each of the distribution units the exact value of the actual stock level of bulk material is detected, and
b) after receiving a detected value from one of the distribution units indicating that the actual stock level of bulk material in said one distribution unit is equal to or falls below the predetermined minimum stock level and after finding that presently bulk material is being conveyed to any of the distribution units,
b1) it is checked, which of the distribution units has the lowest actual stock level,
b2) the conveying system is controlled in such a manner that bulk material is being conveyed to that one of the distribution units which has the lowest actual stock level, and
b3) any other one of the distribution units which has an actual stock level which is equal to or falls below the predetermined minimum stock level is placed in the queue of distribution units to be replenished, wherein the position number in the queue is the lower the lower the actual stock level is.

## Patentansprüche

1. Schüttgutfördersystem zum Fördern eines fließfähigen trockenen Schüttgutmaterials, umfassend:
- einen Hauptspeicherbehälter (1) zum Speichern des trockenen Schüttgutmaterials, wobei der Hauptspeicherbehälter (1) einen Schüttguteinlass (11) und einen Schüttgutauslass (12) aufweist,
- ein Hauptförderrohr (2), das mit dem Schüttgutauslass (12) des Hauptspeicherbehälters (1) verbunden ist und der einer Pumpeneinheit (21) zugeordnet ist, um das Schüttgutmaterial durch das Hauptförderrohr (2) zu treiben,
- eine Mehrzahl von Verteilerrohren (3), deren jedes Verteilerrohr (3) mit dem Hauptförderrohr (2) verbunden ist und ein Verteiterventil (31) aufweist, mittels dem das Verteilerrohr (3) geöffnet und geschlossen werden kann,
- eine Mehrzahl von Verteilereinheiten (4), deren jede Verteilereinheit (4) einen Verteilereinheitsbehälter (41), einen Einlass (42), der mit dem Hauptförderrohr (2) durch ein entsprechendes der Verteilerrohre (3) verbunden ist, einen Materialverteilerauslass (44) und einen Vorratspegeldetektor (43) aufweist, der erfasst, ob der momentane Vorratspegel in dem Verteilereinheitsbehälter (41) gleich einem vorbestimmten minimalen Vorratspegel ist oder darunter fällt oder nicht, und ob der momentane Vorratspegel in dem Verteilereinheitsbehälter (41) gleich einem vorbestimmten maximalen Vorratspegel ist oder diesen überschreitet oder nicht,
- ein Fördersteuersystem (5), *das* sequenziell erfasste Werte von dem Vorratspegeldetektor (43) jeder der Verteilereinheiten (4) empfängt und das Verteilerventil (31) jedes der Verteilerrohre (3) und die Pumpeneinheit (21) auf der Basis der erfassten Werte derart steuert/regelt, dass dann; wenn der momentane Vorratspegel in dem Verteilereinheitsbehälter (41) einer der Verteilereinheiten (4) gleich dem vorbestimmten minimalen Vorratspegel ist oder darunter fällt, Schüttgutmaterial zur Förderung von dem Hauptspeicherbehälter (1) zu dem Verteilereinheitsbehälter (41) einer der Verteilereinheiten (4) angefordert wird, bis der momentane Vorratspegel in dem Verteilereinheitsbehälter (41) der einen der Verteilereinheiten (4) gleich dem vorbestimmten maximalen Vorratspegel ist,
wodurch das Schüttgutfördersystem dazu ausgelegt ist, fließfähiges Schüttgutmaterial unter der Steuerung/Reglung des Fördersteuersystems von dem Hauptspeicherbehälter (1) durch das Hauptförderrohr (2) und durch jedes gewählte der Verteilerrohre (3) in jene Verteilereinheit (4) zu fördern, die mit dem einen gewählten der Verteilerrohre (3) verbunden ist.

2. Schüttgutfördersystem nach Anspruch 1, worin sich der vorbestimmte minimale Vorratspegel von dem vorbestimmten maximalen Vorratspegel unterscheidet.

3. Schüttgutfördersystem nach Anspruch 1 oder 2, worin das Fördersteuersystem (5) das Verteilerventil (31) jedes der Verteilerrohre (3) und die Pumpeneinheit (21) auf der Basis der erfassten Werte derart steuert/regelt, dass dann, wenn der momentane Vorratspegel in dem Verteilereinheitsbehäfter (41) von mehr als einer der Verteilereinheiten (4) gleich dem vorbestimmten minimalen Vorratspegel ist oder darunter fällt, Schüttgutmaterial zu dem Verteilereinheitsbehälter (41) derjenigen der Verteilereinheiten (4) gefördert wird, deren momentaner Vorratspegel zuerst gleich dem vorbestimmten minimalen Vorratspegel war oder darunter gefallen ist.

4. Schüttgutfördersystem nach einem der Ansprüche 1 bis 3, worin der Schüttgutpegeldetektor (43) den exakten momentanen Vorratspegel in dem Verteilereinheitsbehälter (41) erfasst und das Fördersteuersystem (5) das Verteilerventil (31) jedes der Verteilerrohre (3) und die Pumpeneinheit (21) auf der Basis der erfassten Werte derart steuert/regelt, dass dann, wenn der momentane Vorratspegel in dem Verteilereinheitsbehälter(41) von mehr als einer der Verteilereinheiten (4) gleich dem vorbestimmten minimalen Vorratspegel ist oder darunter fällt, Schüttgutmaterial zu dem Verteilereinheitsbehälter (41) derjenigen der Verteilereinheiten (4) gefördert wird, deren momentaner Vorratspegel am niedrigsten ist.

5. Schüttgutfördersystem nach einem der Ansprüche 1 bis 4, das einen Handfördersteuerschalter (6) aufweist, mittels dem der Betrieb des Fördersteuersystems (5) modifiziert oder unterbrochen werden kann.

6. Schüttgutfördersystem nach einem der Ansprüche 1 bis 5, worin jede Verteilereinheit (4) ein Wiegesystem aufweist, das die akkurate Materialmenge misst, die durch den Materialverteilerauslass (44) verteilt wird.

7. Schüttgutfördersystem nach einem der Ansprüche 1 bis 5, worin jede Verteilereinheit (4) eine(n) Materialanforderungsschalter oder-tafel aufweist, mittels dem/der eine gewünschte Materialmenge voreingestellt werden kann und die Verteilereinheit (4) derart gesteuert/geregelt werden kann, dass die gewünschte Materialmenge durch den Materialverteilerauslass (44) verteilt wird.

8. Schüttgutfördersystem nach einem der Ansprüche 1 bis 7, worin jedes der Verteilerrohre (3) umfasst:
a) einen Ventilabschnitt (32), der dasjenige Ende des Verteilerrohrs (3) bildet, das sich an das Hauptförderrohr (2) anschliesst, und der das Verteilerventil (31) umfasst, und
b) einen Verteilereinheitsabschnitt (33), der dasjenige Ende des Verteilerrohrs (3) bildet, das sich an die Verteilereinheit (4) anschliesst, wobei er mit dem Ventilabschnitt (32) trennbar gekoppelt ist und wesentlich länger ist als der Ventilabschnitt (32).

9. Schüttgutfördersystem nach einem der Ansprüche 1 bis 8, worin das Hauptförderrohr (2) gebildet ist aus:
a) einem Hydrantabschnitt (22), der denjenigen Abschnitt des Hauptförderrohrs (2) bildet, wo die Verteilerrohre (3) angeschlossen sind, und
b) einen Fvrderabschnitt (23), der denjenigen Abschnitt des Förderrohrs (2) bildet, der sich zwischen dem Hauptspeicherbehälter (1) und dem Hydrantabschnitt (22) erstreckt, und der mit dem Förderabschnitt (23) trennbar gekoppelt ist.

10. Schüttgutfordersystem nach Anspruch 9, worin der Hydrantabschnitt (22) als ein Stück ausgebildet ist, das ein Hauptrohrabschnitt, Verbindungsrohrabschnitte, die von dem Hauptrohrabschnitt an verschiedenen Längspositionen des Hauptrohrabschnitts seitlich vorstehen, sowie einen Verbindungsanschluss (223) an jedem freien Ende des Hauptrohrabschnitts und der Verbindungsrohrabschnitte umfasst.

11. Schüttgutfördersystem nach Anspruch 9, worin der Hydrantabschnitt (22) in einem modularen System gestaltet ist und eine Mehrzahl von Hydrantelementen (224) umfasst, deren jedes Hydrantelement (224) einen Hauptrohrabschnitt, einen Verbindungsrohrabschnitt, der von dem Hauptrohrabschnitt seitlich vorsteht, sowie einen Verbindungsanschluss (223) an jedem der freien Enden des Hauptrohrabschnitts und des Verbindungsrohrabschnitts aufweist, wobei die Hydrantelemente (224) unter Bildung einer Reihe miteinander verbunden sind, worin die Paare der Verbindungsanschlüsse (224) an den freien Enden der Hauptrohrabschnitte trennbar miteinander verbunden sind.

12. Schüttgutfördersystem nach einem der Ansprüche 1 bis 11, worin eine Mehrzahl von Fördereinheiten mit dem Hauptspeicherbehälter (1) verbunden sind, deren jede Fördereinheit ein Förderrohr (2), eine Mehrzahl von Verteilerrohren (3) und eine Mehrzahl von Verteilereinheiten (4) umfasst.

13. Verwendung des Schüttgutfördersystems nach einem der Ansprüche 1 bis 12 zum Fördern von Baumaterial zu verschiedenen Orten der Baustelle, insbesondere zu verschiedenen Stockwerken eines im Bau befindlichen Gebäudes.

14. Verwendung eines Schüttgutfördersystems nach Anspruch 13 zum Fördern von trockenem Baumaterial, insbesondere einem Gemisch von Pulver und/oder granulären Materialien zu verschiedenen Orten der Baustelle.

15. Verfahren zum Steuern/Regeln eines Schüttgutfördersystems zum Fördern von Schüttgutmaterial von einem Hauptspeicherbehälter zu einer Mehrzahl von Verteilereinheiten über ein Hauptförderrohr und über eine Mehrzahl von Verteilerrohren, wobei jedes Verteilerrohr mit dem Hauptförderrohr verbunden ist und ein Verteilerventil aufweist, mittels dem das Verteilerrohr geöffnet und geschlossen werden kann, welches die Schritte umfasst:
a) Erfassen in jeder der Verteilereinheiten, ob der momentane Vorratspegel von Schüttgutmaterial in der Verteilereinheit gleich einem vorbestimmten minimalen Vorratspegel ist oder darunter fällt oder nicht, und ob der momentane Vorratspegel des Schüttgutmaterials in der Verteilereinheit gleich einem vorbestimmten maximalen Vorratspegel ist oder nicht,
und die weiteren Schritte:
b) sequenzielles Empfangen erfasster Werte von jeder der Verteilereinheiten,
c) wenn ein erfasster Wert von einer der Verteilereinheiten empfangen wird, der anzeigt, dass der momentane Vorratspegel des Schüttgutmaterials in der einen Verteilereinheit gleich dem vorbestimmten minimalen Vorratspegel ist oder darunter fällt,
c1 ) prüfen, ob gegenwärtig Vorratsmaterial zu einer der Verteilereinheiten gefördert wird oder nicht, und
c2) wenn sich herausstellt, dass gegenwärtig Vorratsmaterial zu keiner der Verteilereinheiten gefördert wird, steuern/regeln des Schüttgutfördersystems derart, dass das Fördern des Schüttgutmaterials zu der einen Verteilereinheit gestartet wird,
d) wenn ein erfasster Wert von einer der Verteilereinheiten empfangen wird, der anzeigt, dass der momentane Vorratspegel des Schüttgutmaterials in der einen Verteilereinheit gleich dem vorbestimmten maximalen Vorratspegel ist.
d1) prüfen, ob gegenwärtig Schüttgutmaterial zu der einen Verteilereinheit gefördert wird oder nicht, und
d2) wenn sich herausstellt, dass gegenwärtig Schüttgutmaterial zu der einen Verteilereinheit gefördert wird, steuern/regeln des Fördersystems derart, dass das Fördern des Schüttgutmaterials zu der einen Verteilereinheit gestoppt wird, und
d3) prüfen einer Reihe nachzufüllender Verteilereinheiten, ob die Reihe gegenwärtig eine andere nachzufüllende Verteilereinheit umfasst, und
d4) wenn sich herausstellt, dass die Reihe gegenwärtig eine andere solche Verteilereinheit umfasst, steuern/regeln des Fördersystems derart, dass das Fördern des Schüttgutmaterials zu der anderen Verteilereinheit, die die nächste in der Reihe ist, gestartet wird und die andere Verteilereinheit aus der Reihe gelöscht wird.

16. Verfahren zum Steuern/Regeln eines Schüttgutfördersystems nach Anspruch 15, worin, nach dem Empfang eines erfassten Werts von einer der Verteilereinheiten, der anzeigt, dass der momentane Vorratspegel von Schüttgutmaterial in der einen Verteilereinheit gleich dem vorbestimmten minimalen Vorratspegel ist oder darunter fällt, nach der Prüfung, ob gegenwärtig Schüttgutmaterial zu einer der Verteilereinheiten gefördert wird oder nicht, und nach der Feststellung, dass gegenwärtig Schüttgutmaterial zu einer der Verteilereinheiten gefördert wird,
a) geprüft wird, ob gegenwärtig Schüttgutmaterial zu einer der Verteilereinheiten gefördert wird oder nicht, und
b) wenn sich herausstellt, dass sich gegenwärtig Schüttgutmaterial zu der einen der Verteilereinheiten gefördert wird, das Fördersystem derart gesteuert/geregelt wird, dass das Fördern des Schüttgutmaterials zu der einen der Verteilereinheiten fortgesetzt wird, und
c) wenn sich herausstellt, dass gegenwärtig Schüttgutmaterial nicht zu der einen der Verteilereinheiten gefördert wird, die eine Verteilereinheit am Ende der Reihe der nachzufüllenden Verteilereinheiten angeordnet wird, wenn die eine Verteilereinheit noch nicht in der Reihe ist.

17. Verfahren zum Steuern/Regeln eines Schüttgutfördersystems nach Anspruch 15, worin
a) für jede der Verteilereinheiten der exakte Wert des momentanen Vorratspegels des Schüttgutmaterials erfasst wird, und
b) nach Empfang eines erfassten Werts von einer der Verteilereinheiten, der anzeigt, dass der momentane Vorratspegel des Schüttgutmaterials in der einen Verteilereinheit gleich dem vorbestimmten minimalen Vorratspegel ist oder darunter fällt, und nach der Feststellung, dass gegenwärtig Schüttgutmaterial zu einer der Verteilereinheiten gefördert wird,
b1) geprüft wird, welche der Verteilereinheiten den niedrigsten momentanen Vorratspegel hat,
b2) das Fördersystem derart gesteuert/geregelt wird, dass das Schüttgutmaterial zu derjenigen der Verteilereinheiten gefördert wird, die den niedrigsten momentanen Vorratspegel hat, und
b3) jegliche andere der Verteilereinheiten, die einen momentanen Vorratspegel hat, der gleich dem vorbestimmten minimalen Vorratspegel ist oder darunter fällt, in der Reihe der nachzufüllenden Verteilereinheiten angeordnet wird, wobei die Positionsnummer in der Reihe niedriger ist, je niedriger der momentane Vorratspegel ist.

## Revendications

1. Système de transport en vrac pour transporter un matériau sec pouvant s'écouler en vrac, comportant
- un conteneur de stockage principal (1) pour stocker le matériau sec en vrac, le conteneur de stockage principal (1) ayant une entrée de matériau en vrac (11) et une sortie de matériau en vrac (12),
- un tuyau de transport principal (2) connecté à la sortie de matériau en vrac (12) du conteneur de stockage principal (1), et accompagné par une unité formant pompe (21) pour entraîner le matériau en vrac à travers le tuyau de transport principal (2),
- une pluralité de tuyaux de distribution (3), chaque tuyau de distribution (3) étant connecté au tuyau de transport principal (2), et ayant une vanne de distribution (31) par l'intermédiaire de laquelle le tuyau de distribution (3) peut être ouvert et fermé,
- une pluralité d'unités de distribution (4), chaque unité de distribution (4) ayant un conteneur d'unité de distribution (41), une entrée (42) connectée au tuyau de transport principal (2) par un tuyau correspondant parmi les tuyaux de distribution (3), une sortie de distribution de matériau (44) et un détecteur de niveau de stock (43) détectant si le niveau de stock réel dans le conteneur d'unité de distribution (41) est égal ou inférieur à un niveau de stock minimum prédéterminé, et si le niveau de stock réel dans le conteneur d'unité de distribution (41) est égal ou supérieur à un niveau de stock maximum prédéterminé,
- un système de commande de transport (5) qui reçoit de manière séquentielle des valeurs détectées à partir du capteur de niveau de stock (43) de chacune des unités de distribution (4), et qui commande la vanne de distribution (31) de chacun des tuyaux de distribution (3) et l'unité formant pompe (21) sur la base des valeurs détectées de telle sorte que si le niveau de stock réel dans le conteneur d'unité de distribution (41) d'une quelconque des unités de distribution (4) est égal au niveau de stock minimum prédéterminé, ou tombe en dessous de celui-ci, un transport de matériau en vrac est demandé à partir du conteneur de stockage principal (1) vers le conteneur d'unité de distribution (41) d'une des unités de distribution (4) jusqu'à ce que le niveau de stock réel dans le conteneur d'unité de distribution (41) d'une desdites unités de distribution (4) soit égal au niveau de stock maximum prédéterminé,
de sorte que le système de transport en vrac est adapté pour transporter du matériau en vrac pouvant s'écouler sous la commande du système de commande de transport à partir du conteneur de stockage principal (1) à travers le tuyau de transport principal (2), et à travers chaque tuyau sélectionné parmi les tuyaux de distribution (3) dans cette unité de distribution (4) qui est connectée audit tuyau sélectionné parmi les tuyaux de distribution (3).

2. Système de transport en vrac selon la revendication 1, dans lequel le niveau de stock minimum prédéterminé est différent du niveau de stock maximum prédéterminé.

3. Système de transport en vrac selon la revendication 1 ou 2, dans lequel le système de commande de transport (5) commande la vanne de distribution (31) de chacun des tuyaux de distribution (3) et l'unité formant pompe (21), sur la base des valeurs détectées d'une manière telle que si le niveau de stock réel dans le conteneur d'unité de distribution (41) de plus d'une des unités de distribution (4) est égal ou inférieur au niveau de stock minimum prédéterminé, du matériau en vrac est transporté vers le conteneur d'unité de distribution (41) de celle des unités de distribution (4) dont le niveau de stock réel était égal ou inférieur au niveau de stock minimum prédéterminé.

4. Système de transport en vrac selon l'une quelconque des revendications 1 à 3, dans lequel le détecteur de niveau de stock (43) détecte le niveau de stock réel exact dans le conteneur d'unité de distribution (41), et le système de commande de transport (5) commande la vanne de distribution (31) de chacun des tuyaux de distribution (3) et l'unité de pompe (21) sur la base des valeurs détectées d'une manière telle que si le niveau de stock réel dans le conteneur d'unité de distribution (41) de plus d'une des unités de distribution (4) est égal au niveau de stock minimum prédéterminé, ou tombe en dessous de celui-ci, du matériau en vrac est transporté vers le conteneur d'unité de distribution (41) de celle des unités de distribution (4) dont le niveau de stock réel est le plus bas.

5. Système de transport en vrac selon l'une quelconque des revendications 1 à 4, comportant un commutateur de commande de transport manuel (6) par l'intermédiaire duquel on peut modifier ou interrompre le système de commande de transport (5).

6. Système de transport en vrac selon l'une quelconque des revendications 1 à 5, dans lequel chaque unité de distribution (4) a un système de pesage qui mesure la quantité réelle de matériau distribuée à travers la sortie de distribution de matériau (44).

7. Système de transport en vrac selon l'une quelconque des revendications 1 à 5, dans lequel chaque unité de distribution (4) a un commutateur ou un panneau de demande de matériau, par l'intermédiaire duquel une quantité souhaitée de matériau peut être pré-établie, et l'unité de distribution (4) peut être commandée d'une manière telle que la quantité souhaitée de matériau est distribuée à travers la sortie de distribution de matériau (44).

8. Système de transport en vrac selon l'une quelconque des revendications 1 à 7, dans lequel chacun des tuyaux de distribution (3) comporte
a) une partie de vanne (32) formant cette extrémité du tuyau de distribution (3) qui est reliée au tuyau de transport principal (2), et comportant la vanne de distribution (31), et
b) une partie d'unité de distribution (33) formant cette extrémité de tuyau de distribution (3) dont l'extrémité est reliée à l'unité de distribution (4), étant accouplée de manière à pouvoir être déconnectée à la partie de vanne (32), et étant sensiblement plus longue que la partie de vanne (32).

9. Système de transport en vrac selon l'une quelconque des revendications 1 à 8, dans lequel le tuyau de transport principal (2) est constitué
a) d'une partie prise d'eau (22) formant la partie du tuyau de transport principal (2) où les tuyaux de distribution (3) sont réunis, et
b) d'une partie de transport (23) formant la partie du tuyau de transport (2) qui s'étend entre le conteneur de stockage principal (1) et la partie prise d'eau (22), et étant accouplée de manière à pouvoir être déconnectée à la partie de transport (23).

10. Système de transport en vrac selon la revendication 9, dans lequel la partie prise d'eau (22) est sous la forme d'une seule pièce comportant une partie de tuyau principal, des parties de tuyau de liaison faisant saillie latéralement à partir de la partie de tuyau principale au niveau de positions longitudinales différentes de la partie de tuyau principal, et d'une jonction de liaison (223) à chaque extrémité libre de la partie de tuyau principal et des parties de tuyau de liaison.

11. Système de transport en vrac selon la revendication 9, dans lequel la partie prise d'eau (22) est conçue selon un système modulaire, et comporte de plus une pluralité d'éléments de prise d'eau (224), chaque élément de prise d'eau (224) ayant une partie de tuyau principal, une partie de tuyau de liaison faisant saillie latéralement à partir de la partie de tuyau principal, et une jonction de liaison (223) à chacune des extrémités libres de la partie de tuyau principal et de la partie de tuyau de liaison, les éléments de prise d'eau (224) étant reliés de manière à former un rang, des paires de jonctions de liaison (224) situées aux extrémités libres des parties de tuyau principale sont reliées les unes aux autres de manière à pouvoir être déconnectées.

12. Système de transport en vrac selon l'une quelconque des revendications 1 à 11, dans lequel une pluralité d'unités de transport sont connectées au conteneur de stockage principal (1), chaque unité de transport comportant un tuyau de transport (2), une pluralité de tuyaux de distribution (3) et une pluralité d'unités de distribution (4).

13. Utilisation du système de transport en vrac selon l'une quelconque des revendications 1 à 12, pour transporter un matériau de construction vers différents emplacements du site de construction, en particulier vers différents niveaux d'un bâtiment en construction.

14. Utilisation du système de transport en vrac selon la revendication 13, pour transporter un matériau de construction sec, en particulier un mélange de poudre et/ou de matériau granulaire vers lesdits différents emplacements du site de construction.

15. Procédé pour commander un système de transport en vrac afin de transporter un matériau en vrac à partir d'un conteneur de stockage principal vers une pluralité d'unités de distribution, via un tuyau principal et via une pluralité de tuyaux de distribution, chaque tuyau de distribution étant connecté au tuyau de transport principal et ayant une vanne de distribution par l'intermédiaire de laquelle le tuyau de distribution peut être ouvert et fermé, comportant les étapes consistant à
a) détecter dans chacune des unités de distribution si le niveau de stock réel du matériau en vrac dans l'unité de distribution est ou non égal, ou est inférieur à un niveau de stock minimum prédéterminé, et si le niveau de stock réel du matériau en vrac dans l'unité de distribution est ou non égal à un niveau de stock maximum prédéterminé, et les étapes supplémentaires consistant à
b) recevoir séquentiellement des valeurs détectées par chacune des unités de distribution,
c) si une valeur détectée est reçue à partir d'une des unités de distribution, indiquer que le niveau de stock réel du matériau en vrac dans ladite unité de distribution est égal au niveau de stock minimum prédéterminé, ou tombe en dessous de celui-ci,
c1) vérifier si le matériau actuellement en vrac est transporté ou pas vers l'une quelconque des unités de distribution, et
c2) s'il s'avère que le matériau actuellement en vrac n'est transporté vers aucune des unités de distribution, commander le système de transport en vrac de telle manière que le transport de matériau en vrac vers ladite unité de distribution est démarré,
d) si une valeur détectée est reçue à partir d'une des unités de distribution, indiquer que le niveau de stock réel du matériau en vrac dans ladite unité de distribution est égal au niveau de stock maximum prédéterminé,
d1) vérifier si le matériau actuellement en vrac est transporté ou pas vers ladite unité de distribution, et
d2) s'il s'avère que le matériau actuellement en vrac est transporté vers ladite unité de distribution, commander le système de transport de telle manière que le transport du matériau en vrac vers ladite unité de distribution est arrêté, et
d3) vérifier une file d'unités de distribution devant être remplies si la file comporte actuellement une autre unité de distribution devant être remplie, et
d4) s'il s'avère que la file comporte actuellement ladite autre unité de distribution, commander le système de transport de sorte que le transport de matériau en vrac vers ladite autre unité de distribution qui est la suivante dans la file est démarré, et supprimer ladite autre unité de distribution à partir de la file.

16. Procédé pour commander un système de transport en vrac selon la revendication 15, dans lequel, après réception d'une valeur détectée provenant d'une des unités de distribution indiquant que le niveau de stock réel de matériau en vrac dans ladite unité de distribution est égal au niveau de stock minimum prédéterminé, ou tombe en dessous de celui-ci, après vérification pour savoir si le matériau actuellement en vrac est transporté ou pas vers l'une quelconque des unités de distribution, et après avoir trouvé que le matériau actuellement en vrac est transporté vers l'une quelconque des unités de distribution,
a) on vérifie si le matériau actuellement en vrac est transporté ou pas vers l'une des unités de distribution, et
b) s'il s'avère que le matériau actuellement en vrac est transporté vers l'une des unités de distribution, le système de transport est commandé de sorte que le transport de matériau en vrac vers cette unité de distribution est poursuivi, et
c) s'il s'avère que le matériau actuellement en vrac n'est pas transporté vers l'une des unités de distribution, ladite unité de distribution est placée à la fin de la file constituée d'unités de distribution devant être remplies si ladite unité de distribution n'est pas encore dans la file.

17. Procédé pour commander un système de transport en vrac selon la revendication 15, dans lequel
a) pour chacune des unités de distribution, la valeur exacte du niveau de stock réel de matériau en vrac est détectée, et
b) après réception d'une valeur détectée à partir d'une des unités de distribution indiquant que le niveau de stock réel du matériau en vrac dans ladite unité de distribution est égal au niveau de stock minimum prédéterminé, ou tombe en dessous de celui-ci, et après avoir trouvé que le matériau en vrac est en cours de transport vers l'une quelconque des unités de distribution,
b1) on vérifie laquelle des unités de distribution a le niveau de stock réel le plus bas,
b2) le système de transport est commandé de telle manière que le matériau en vrac est transporté vers celle des unités de distribution qui a le niveau de stock réel le plus bas, et
b3) une autre quelconque parmi les unités de distribution qui a un niveau de stock réel qui est égal au niveau de stock minimum prédéterminé, ou qui tombe en dessous de celui-ci, est placée à la suite des unités de distribution devant être remplies, dans lequel plus le niveau de stock est bas, plus le numéro de position dans la file est bas.
